# DEMANDE DE BREVET EUROPEEN

(11) **EP 1 384 702 A1**
(43) Date de publication de la demande: **28.01.2004**
(21) Numéro de dépôt: 03370029.5
(22) Date de dépôt: 16.07.2003
(51) Int. Cl.: C04B 14/06, C04B 14/38, C04B 26/02, C04B 41/48

(54) **Composition de mortier destinée au traitement et/ou ragréage de surfaces, notamment en béton et/ou ciment**

(30) Priorité: 16.07.2002 FR 0208981
(71) Demandeur: Fournier, Gérard, 62500 Saint Omer (FR)
(72) Inventeur: Fournier, Gérard, 62500 Saint Omer (FR)
(74) Mandataire: Duthoit, Michel

(57) **Abrégé**

La présente invention est relative à une composition de mortier, destinée au traitement et/ou ragréage de surfaces, notamment en béton et/ou ciment, comportant une résine, un catalyseur, des fibres coupées, un tixotrope, un agent thermoplastique anti retrait et des particules de quartz.

## Description

La présente invention concerne une composition de mortier destinée au traitement et/ou ragréage de surfaces, notamment en béton et/ou ciment.

Toutefois, bien que plus particulièrement prévue pour de telles surfaces, elle pourra également être utilisée sur d'autres types de surfaces à l'instar des mortiers classiques.

L'invention trouvera également une application avantageuse dans le ragréage de poteaux électriques en béton.

Il est connu de nombreux types de mortier avec de multiples types de compositions. Cela étant, les mortiers connus présentent différents inconvénients qui les rendent peu adaptés à certaines applications.

Notamment, les mortiers connus ne présentent pas une ou plusieurs des caractéristiques suivantes : consistance du mortier pour une application sur des surfaces verticales, adhérence du mortier sur le béton et/ou ciment après absorption par ces derniers des liquides, coefficients de dilatation éloignés de ceux des bétons et ciments, prise trop rapide ou trop lente en fonction des applications, difficultés de coloration du mortier.

Ainsi, généralement, le traitement et/ou ragréage de surfaces en béton et notamment de poteaux électriques par des mortiers connus n'est qu'une solution provisoire, les mortiers n'étant en effet pas adaptés à cette utilisation, des fissures peuvent apparaître ou réapparaître rapidement au niveau des parties traitées ou ragréées.

Pour pallier cet inconvénient, il est également connu d'entourer une surface à traiter avec un mortier classique avec un bandage. Cela étant, là encore, il s'agit d'une solution provisoire qui a pour but principal d'éviter la chute de morceaux de béton ou mortier. Ainsi, dans la pratique, en reprenant l'exemple des poteaux électriques, ces solutions ne sont utilisées que dans l'urgence en attendant le remplacement proprement dit du poteau.

Le but de l'invention est de proposer une composition de mortier qui pallie les inconvénients précités et permet un traitement et/ou ragréage de surfaces présentant une résistance importante aux phénomènes d'usure.

Un autre but de la présente invention est de proposer une composition de mortier présentant des caractéristiques physiques permettant son utilisation avec des matériaux en béton et/ou ciment.

Un autre but de la présente invention est de proposer une composition de mortier destinée au traitement et/ou ragréage de surfaces qui permet une mise en oeuvre aisée.

D'autres buts et avantages de la présente invention apparaîtront au cours de la description qui va suivre qui n'est donnée qu'à titre indicatif et qui n'a pas pour but de la limiter.

Selon l'invention, la composition de mortier, destinée au traitement et/ou ragréage de surfaces, notamment en béton et/ou ciment comporte une résine, un catalyseur, des fibres coupées, un agent thixotrope, un agent thermoplastique anti retrait et des particules de quartz.

L'invention vise également un procédé de traitement et/ou ragréage de surfaces dans lequel on réalise :
- une étape de nettoyage de la surface,
- une étape d'application du mortier de composition telle que précitée.

L'invention sera mieux comprise à la lecture de la description suivante qui en développe certains modes de réalisation.

L'invention concerne une composition de mortier destinée au traitement et/ou ragréage de surfaces notamment en béton et/ou ciment. Ladite composition comporte une résine qui est de préférence formulée à base de polyester, ou vinylester.

La composition comprend également un catalyseur destiné à initier ou favoriser la réaction de polymérisation.

Selon un mode avantageux de l'invention, ledit catalyseur est du péroxyde de benzoyle.

Dans une autre variante de la présente invention, on peut utiliser comme catalyseur, un système catalytique consistant en un accélérateur et un catalyseur. L'accélérateur est du N,N-diméthylaniline en solution à 10 % dans un ester aliphatique, dénommé NL-63-10P, et le catalyseur est du péroxide de dibenzoyle en suspension liquide à 40 % dans le phtalate du diisobutyle, commercialisé sous le nom Cadox 40 E.

Cela étant, d'autres types de catalyseurs connus de l'homme du métier peuvent également être utilisés pour initier ladite réaction de polymérisation.

Ladite composition comporte également un agent thermoplastique anti retrait. Cet agent permet de compenser les espaces laissés lors de l'absorption de l'eau par le béton et/ou ciment. Avantageusement, ledit agent anti retrait est formulé à base d'élastomère en solution dont du styrène.

Ladite composition de mortier comporte en outre un tixotrope, ce dernier est un épaississant, il permet notamment d'éviter les coulées du mortier particulièrement après une application en vertical ou sous voûte.

Dans une autre variante de la présente invention, l'élastomère en solution dans du styrène est substitué par une dispersion pâteuse de fines particules de silice dans des résines polyester insaturées, commercialisée sous le nom de Pregel 17.

Ladite composition comprend également des fibres coupées qui permettent de conférer au mortier une texture fibrée permettant d'une part de renforcer les propriétés en ponçabilité du mortier et d'autre part d'augmenter la résistance du mortier à la fissuration.

On pourra notamment utiliser comme résine une résine vinylester commercialisée sous la marque DERAKANE et sous la référence 80-84. Cette résine est flexibilisée par un élastomère et présente d'excellentes propriétés d'adhésion, elle est également adaptée à des applications anticorrosion et empêche la rouille des fers contenus dans les poteaux électriques.

Ladite composition de mortier comprend également des particules de quartz présentées avantageusement sous fine granulation, et notamment du quartz du type silice 30.

Ladite composition de mortier peut également comprendre un ou plusieurs accélérateurs. Ces accélérateurs sont notamment destinés à améliorer le dosage de la résine et accélérer sa coulée. Il pourra notamment s'agir d'un accélérateur de type OC1D à 1 % de cobalt actif. On pourra également utiliser un accélérateur commercialisé sous la marque SOLIGEN 210 de manière à diminuer les temps de cycle dans le cas d'une injection basse pression, ce dernier accélérateur étant formulé à partir d'un complexe sel de cobalt et amine.

On donne dans la suite un exemple, non limitatif, avantageux de formulation de ladite composition conforme à l'invention, les proportions étant données en poids.

### EXEMPLE :

- résine : 20 à 30 % de préférence 25 %
- catalyseur : 0,25 à 0,6 % de préférence 0,35 %
- fibres coupées : 0,7 à 1,3 % de préférence 1 %
- tixotrope : 1,2 à 3 % de préférence 2 %
- agent thermoplastique anti-retrait : 1,7 à 3,2 % de préférence 2,5 %
- quartz fine granulation : 65 à 75 % de préférence voisin de 70 %.

La présente invention vise également un procédé de traitement et/ou ragréage de surfaces dans lequel on réalise :
- une étape de nettoyage de la surface,
- une étape d'application du mortier selon la composition telle que précitée.

L'étape de nettoyage de la surface consiste à rendre propre et cohérent le support et dans le cas du ragréage de poteaux électriques, le dégagement des fers et éventuellement leur dérouillage et dépoussiérage.

En fonction de la nature des surfaces à traiter, il pourra être utile de prévoir en outre une étape d'application d'une résine d'accrochage après l'étape de nettoyage. Cette étape supplémentaire permet de faciliter l'adhérence avec le mortier et se révèle particulièrement adaptée lorsque les surfaces à traiter sont relativement lisses. A cet effet, on imprègne la surface à traiter avec ladite résine d'accrochage sur laquelle on applique, avant séchage de ladite résine, ledit mortier.

Le procédé peut comprendre en outre une étape de lissage de la surface traitée et/ou ragréée de manière à améliorer la finition de la surface. On peut également prévoir une étape de bandage de la surface à traiter et/ou réparer. Cette étape de bandage est particulièrement adaptée dans le cas où la surface traitée et/ou ragréée est importante. Le bandage est réalisé à partir d'une gaine tressée notamment de fibres de verre ou kevelar. De manière à améliorer la tenue de la gaine, cette dernière est combinée avec des microbilles de verre que l'on incorpore au mortier.

Il est également possible d'envisager différentes étapes permettant d'améliorer encore la finition de la surface traitée et/ ragréée et notamment en assurant une étape supplémentaire dans laquelle on applique une nouvelle couche de résine, ladite résine présentant une couleur identique aux surfaces périphériques à celles traitées.

Naturellement, d'autres modes de réalisation, à la portée de l'homme de l'art, auraient pu être envisagés sans pour autant sortir du cadre de la présente invention telle que définie dans les revendications ci-après.

## Revendications

1. Composition de mortier, destinée au traitement et/ou ragréage de surfaces, notamment en béton et/ou ciment, comportant une résine, un catalyseur, des fibres coupées, un agent thixotrope, un agent thermoplastique anti retrait et des particules de quartz.

2. Composition de mortier selon la revendication 1, dans laquelle ladite résine est formulée à base de vinylester.

3. Composition de mortier selon l'une quelconque des revendications 1 et 2, dans laquelle ledit catalyseur est du péroxyde de benzoyle.

4. Composition de mortier selon l'une quelconque des revendications précédentes dans laquelle le catalyseur se présente sous la forme d'un système catalytique consistant en du N.N-diméthylamiline à 10 % dans un ester aliphatique et du péroxide de dibenzoyle en suspension liquide à 40 % dans le phtalate de diisobutyle.

5. Composition de mortier selon l'une quelconque des revendications précédentes, dans laquelle ledit agent thermoplastique anti-retrait est formulé à base d'élastomère en solution dans du styrène.

6. Composition de mortier selon l'une quelconque des revendications précédentes dans laquelle ledit agent thermoplastique anti-retrait est formé à base d'une dispersion pâteuse de fines particules de silice dans des résines polyester insaturées.

7. Composition de mortier selon l'une quelconque des revendications précédentes, dans laquelle lesdites particules de quartz sont du type silice 30.

8. Composition de mortier selon l'une quelconque des revendications précédentes, dans laquelle on prévoit en poids :
- 20 à 30 % de résine,
- 0,25 à 0,6 % de catalyseur,
- 0,7 à 1,3 % de fibres coupées,
- 1,2 à 3 % d'agent thixotrope,
- 1,7 à 3,2 % d'agent thermoplastique anti retrait,
- 65 à 75 % de quartz fine granulation.

9. Procédé de traitement et/ou ragréage de surface dans lequel on réalise :
- une étape de nettoyage de la surface à traiter,
- une étape d'application du mortier selon la composition de l'une quelconque des revendications 1 à 6 précédentes.

10. Procédé selon la revendication 7 précédente, dans lequel on prévoit en outre une étape d'application d'une résine d'accrochage postérieurement à l'étape de nettoyage.

11. Procédé selon l'une quelconque des revendications 7 et 8, dans lequel on prévoit en outre une étape de lissage de la surface traitée et/ou ragréée.

12. Procédé selon l'une quelconque des revendications 7 à 9, dans lequel on prévoit en outre une étape de bandage de la surface de la surface traitée et/ou ragréé à l'aide d'un bandage combiné à des microbilles de verre.
